# EUROPEAN PATENT SPECIFICATION

(11) **EP 3 075 815 B1**
(45) Date of publication and mention of the grant of the patent: **09.10.2019**
(21) Application number: 14865751.3
(22) Date of filing: 10.11.2014
(51) Int. Cl.: C08K 9/12, C08K 3/36, C08K 5/3435, C08L 23/02

(54) **LIGHT STABILIZER COMPOSITION AND RESIN COMPOSITION CONTAINING SAME**
LICHTSTABILISATORZUSAMMENSETZUNG UND HARZZUSAMMENSETZUNG DAMIT
COMPOSITION DE STABILISANT OPTIQUE ET COMPOSITION DE RÉSINE LA CONTENANT

(30) Priority: 26.11.2013 JP 2013244183
(43) Date of publication of application: 05.10.2016
(73) Proprietor: Adeka Corporation, Tokyo 116-8554 (JP)
(72) Inventor: AYABE, Takashi, Saitama-shi Saitama 336-0022 (JP); USUI, Takashi, Saitama-shi Saitama 336-0022 (JP); YOKOMORI, Minako, Saitama-shi Saitama 336-0022 (JP)
(74) Representative: Forstmeyer, Dietmar
(86) International application number: PCT/JP2014/079718
(87) International publication number: WO 2015/079896

(56) References cited:
- EP-A1- 0 745 646
- WO-A1-2007/000876
- JP-A- 2004 155 942
- US-A1- 2013 296 453

## Description

### TECHNICAL FIELD

This invention relates to a light stabilizer composition that can be used to advantage in vehicle parts, such as instrument panels, bumpers, upholstery, and so on. More particularly, it relates to a light stabilizer composition containing highly hydrated silica impregnated with a hindered amine compound and a resin composition containing the same.

### BACKGROUND ART

Because polyolefin resins do not withstand long-term use on account of light deterioration, it is a generally followed practice to incorporate an ultraviolet absorber or a hindered amine compound to polyolefin resins to stabilize them for an extended period of time of use.

It is generally preferred for a compound used as a light stabilizer to have a high melting point so as to avoid plasticizing the resin to which it is added and being vaporized from the resin. However, a light stabilizer having an increased molecular weight is restrained from moving in a resin, tending to exhibit lessened stabilization effects.

A hindered amine compound obtained by the reaction between a 2,2,6,6-tetramethylpiperidinol and a fatty acid is, while having a low melting point, capable of imparting excellent weatherability. When it is added to a polyolefin resin, however, the weatherability effect does not last long due to its volatility from the resin. In addition to this, the hindered amine compound has a handling problem because of its liability to become liquid due to the low molecular weight and liability to have a tacky surface.

Approaches for improving handling properties of a liquid or low-melting additive so far proposed include a masterbatching method proposed in Patent Document 1, a microencapsulation method proposed in Patent Document 2, and a method in which an additive is infiltrated into an inorganic powder having an oil absorption of 150 ml/100 g or more that is disclosed in Patent Document 3.

### CITATION LIST

### Patent Document:

Patent Document 1: JP 2003-41008A
Patent Document 2: US 5837759
Patent Document 3: US 2009/0088513

### SUMMARY OF THE INVENTION

### Problem to be solved by the Invention:

However, there is a still-unsolved technical problem with the masterbatching method that a hindered amine compound if incorporated in a high concentration bleeds out to make the surface of the master bath tacky and, therefore, the concentration of the hindered amine cannot help but be held down. The microencapsulation method is costly. Acceleration of crystallization is effective in improving handling properties over an amorphous substance but inapplicable to liquids. Furthermore, when the crystallized compound has a low melting temperature, an anticaking effect is low only to provide insufficient improving effect on handling properties. The method described in Patent Document 3 uses a highly alkaline powder as a medium to be impregnated with a liquid resin additive. In some cases, however, an alkaline powder colors other resin additives, especially a phenol antioxidant. An embodiment in which an aluminum silicate compound is used as a medium is also disclosed, but an aluminum silicate compound is relatively expensive and is of low industrial utility.

An object of the invention is to provide a light stabilizer composition containing a hindered amine compound obtained by the reaction between a 2,2,6,6-tetramethylpiperidinol and a carbonic ester and having improved handling properties.

As a result of extensive investigations with intent to solve the problem, the inventors have found that the above object is accomplished by infiltrating the hindered amine compound into silica having a specific water content.

The invention provides a light stabilizer composition comprising (A) 100 parts by mass of silica having a water content of 2 to 7 wt% impregnated with (B) 10 to 300 parts by mass of a hindered amine compound represented by general formula (1): 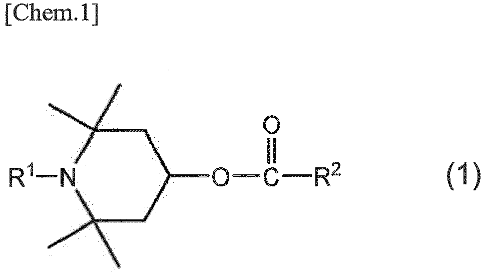 wherein R¹ represents a hydrogen atom, a hydroxyl group, an alkyl group having 1 to 30 carbon atoms, a hydroxyalkyl group, an alkoxy group, a hydroxyalkoxy group, or an oxy radical; and R² represents an alkyl group having 1 to 30 carbon atoms, an alkenyl group having 2 to 30 carbon atoms, or a group represented by general formula (2): 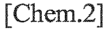 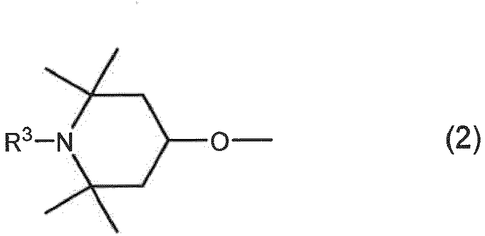 wherein R³ has the same meaning as R¹.

In a preferred embodiment of the light stabilizer composition of the invention, the silica as component (A) has a particle size of 0.1 to 100 µm.

The light stabilizer composition of the invention preferably further comprises (C) 5 to 500 parts by mass of a benzoate light stabilizer represented by general formula (3): 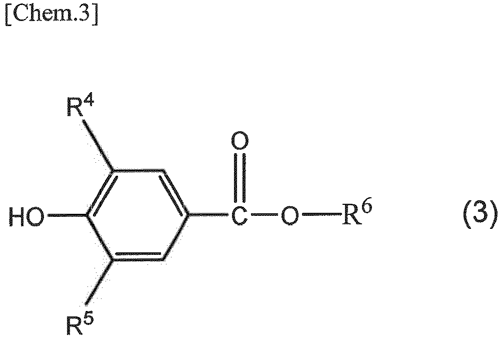 wherein R⁴ and R⁵ each independently represent a hydrogen atom, an alkyl group having 1 to 12 carbon atoms, or an arylakyl group having 7 to 30 carbon atoms; and R⁶ represents an alkyl group having 8 to 30 carbon atoms.

The invention also provides a resin composition comprising 100 parts by mass of a resin and 0.01 to 1 part by mass of the light stabilizer composition.

In a preferred embodiment of the resin composition of the invention, the resin is a polyolefin resin.

The invention also provides a vehicle part obtained by molding the resin composition.

### Effect of the Invention:

The invention provides a light stabilizer composition having excellent handling properties and capable of imparting high weatherability to resins.

The invention also provides a highly weatherable resin composition obtained by incorporating the light stabilizer composition of the invention into a resin. The resin composition is suited to make vehicle parts.

### BEST MODE FOR CARRYING OUT THE INVENTION

The invention will be described in detail.

### (A) Silica

Silica includes naturally-occurring products and synthetic products, any of which can be crystalline or amorphous. Examples of naturally-occurring crystalline silica are quartz, crystal, and siliceous sand. Examples of naturally-occurring amorphous silica are diatomaceous earth and acid clay. Examples of synthetic amorphous silica include dry processed silica, wet processed silica, and silica gel. With considerations given to inexpensiveness and avoidance of hindrance to the performance of other resin additives, neutral silica with a pH of about 6 to 8 is preferred.

The silica (A) that can be used in the invention has a water content of 2 to 7 wt%. With a water content less than 2 wt%, the inorganic matter of the powder is electrified to agglomerate, making the composition difficult to handle. If the water content is more than 7 wt%, a resin composition, e.g., a polyolefin resin composition containing it can foam when molded. The water content of silica is easy to control by conditioning in an environment with an adjusted humidity. The water content is also adjustable by spraying water or by drying in vacuo or using a heat source.

The average particle size of the silica (A) preferably ranges 0.1 to 100 µm, more preferably 0.3 to 50 µm, even more preferably 0.5 to 30 µm, while varying according to the use of the molded product of the resin composition. With an average particle size exceeding the above range, the silica can have reduced dispersibility in a resin to impair the resin physical properties. Silica with an average particle size smaller than that range is liable to generate dust to contaminate the working environment.

The silica (A) for use in the invention is not particularly limited by the method of preparation, and silica synthesized by any known method may be used. Examples of processes for silica synthesis include (a) burning silicon tetrachloride in an oxygen or hydrogen flame, (b) processing a by-product from metallosilicon production, (c) neutralization of sodium silicate with a mineral acid (e.g., sulfuric acid or hydrochloric acid), and (d) hydrolysis of an alkoxysilane. Various silica species different in particle size, surface structure, porosity, and so forth are obtained through selected reaction conditions.

Examples of suitable commercially available products for use as silica (A) include, but are not limited to, Mizukasil P-78D from Mizusawa Industrial Chemicals, Ltd., Carplex #80 from DSL. Japan Co., Ltd., Sipernat 22S from Evonik, and Nipgel KP and Nipgel NS both from Tosoh Silica Corp.

### (B) Hindered amine compound

The hindered amine compound that can be used in the invention as component (B) is represented by general formula (1). It is obtained by the reaction between a 2,2,6,6-tetramethylpiperidinol and a carbonic ester.

In general formula (1), examples of the C1-C30 alkyl group as represented by R¹ and R² include methyl, ethyl, propyl, isopropyl, butyl, isobutyl, sec-butyl, tert-butyl, pentyl, sec-pentyl, tert-pentyl, hexyl, heptyl, octyl, isooctyl, 2-ethylhexyl, tert-octyl, nonyl, isononyl, decyl, undecyl, dodecyl, tridecyl, tetradecyl, pentadecyl, hexadecyl, heptadecyl, and octadecyl. R¹ and R² may be the same or different.

Examples of the C1-C30 hydroxyalkyl group as represented by R¹ in formula (1) include the above enumerated alkyl groups substituted with a hydroxyl group, e.g., hydroxyethyl, 2-hydroxypropyl, and 3-hydroxypropyl.

Examples of the C1-C30 alkoxy group as represented by R¹ in formula (1) include those corresponding to the above enumerated alkyl groups, e.g., methoxy, ethoxy, propoxy, isopropoxy, butoxy, octyloxy, and 2-ethylhexyloxy.

Examples of the C1-C30 hydroxyalkoxy group as represented by R¹ in formula (1) include those corresponding to the above recited alkyl groups, e.g., hydroxyethoxy, 2-hydroxypropoxy, 3-hydroxypropoxy, 4-hydroxybutoxy, 2-hydroxy-2-methylpropoxy, and 6-hydroxyhexyloxy.

Examples of the C2-C30 alkyl group as represented by R² in formula (1) include vinyl, propenyl, butenyl, hexenyl, and oleyl. The position of the double bond may be the α-position, the ω-position, or any position therebetween.

Specific examples of the compound represented by general formula (1) that can be used in the invention include, but are not limited to, compound Nos. 1 through 9 shown below. A compound number with the term "mixed alkyl" indicates a mixture of hindered amine compounds of general formula (1) wherein R¹ is a C15-C17 alkyl group (Compound Nos. 7 and 8) or R¹ is a C15-C19 alkyl group (Compound No. 9).

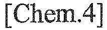

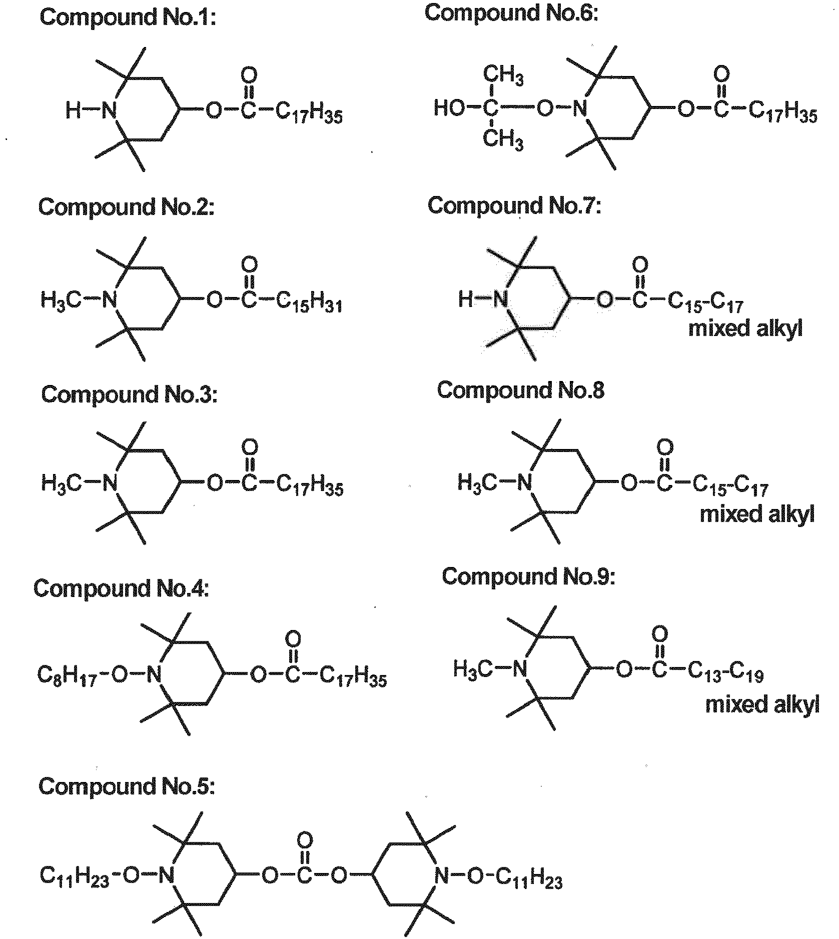

Of the hindered amine compounds of general formula (1) preferred are those in which R¹ is hydrogen or methyl, and R² is C8-C26 mixed alkyl.

The hindered amine compound of general formula (1) is synthesized by the reaction of a combination of a fatty acid having a desired number of carbon atoms and an alcohol having a 2,2,6,6-tetramethylpiperidinol structure. For example, the reaction may be a direction esterification reaction between an acid and an alcohol, a reaction between an acid halide and an alcohol, or an interesterification reaction. The resulting reaction product may be purified by an appropriately selected method, such as distillation, recrystallization, filtration, or adsorption.

The light stabilizer composition of the invention comprises (A) 100 parts by mass of the silica impregnated with (B) 10 to 300 parts, preferably 30 to 200 parts, more preferably 60 to 120 parts, by mass of the hindered amine compound of general formula (1).

### (C) Benzoate light stabilizer

The benzoate light stabilizer that can be used in the invention as component (C) is a compound represented by general formula (3): 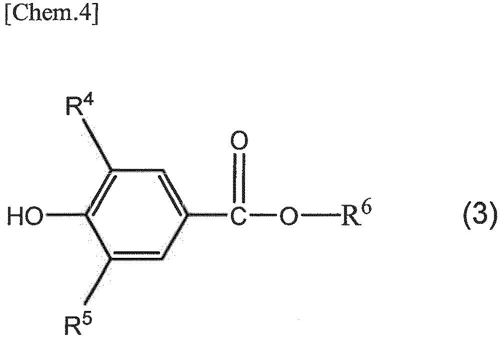 wherein R⁴ and R⁵ each independently represent a hydrogen atom, an alkyl group having 1 to 12 carbon atoms, or an arylakyl group having 7 to 30 carbon atoms; and R⁶ represents an alkyl group having 8 to 30 carbon atoms.

Examples of the C1-C12 alkyl as represented by R⁴ and R⁵ in general formula (3) include methyl, ethyl, propyl, isopropyl, butyl, sec-butyl, tert-butyl, pentyl, hexyl, octyl, and cycloalkyl, e.g., cyclopentyl and cyclohexyl.

Examples of the C7-C30 arylalkyl as represented by R⁴ and R⁵ in general formula (3) include benzyl, phenylethyl, and 1-methyl-1-phenylethyl.

Examples of the C8-C30 alkyl as represented by R⁶ in general formula (3) include octyl, nonyl, decyl, undecyl, dodecyl, tridecyl, tetradecyl, pentadecyl, hexadecyl, and octadecyl.

Specific examples of the benzoate light stabilizer of general formula (3) include, but are not limited to, the following compounds UV-1 to UV-4:

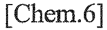

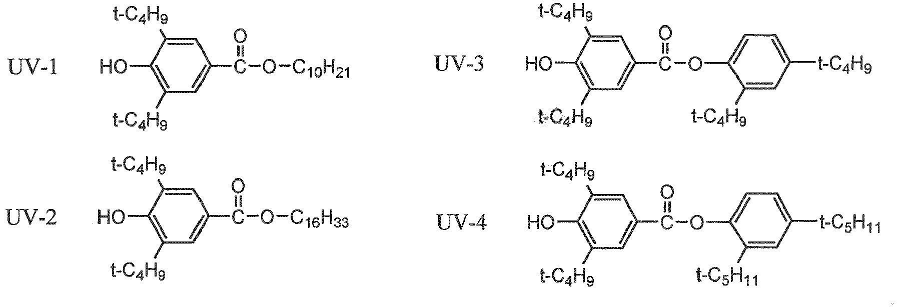

The benzoate light stabilizer (C) of formula (3) is preferably present in the light stabilizer composition of the invention in an amount of 5 to 500 parts by mass, more preferably 10 to 300 parts by mass, per 100 parts by mass of the silica (A).

The ratio of the benzoate light stabilizer of formula (3) to the hindered amine compound of formula (1) in the light stabilizer composition of the invention is preferably 1/4 to 3/1. At a ratio smaller than 1/4, the synergetic effect expected of the combined use of the hindered amine compound and the benzoate light stabilizer may not be obtained. At a ratio greater than 3/1, the hindered amine compound can fail to exhibit its light stabilizing performance.

When the light stabilizing composition of the invention contains components other than components (A) to (C), it is preferred that the total amount of the other components be within 200 parts by mass per 100 parts by mass of the silica (A).

The compound of formula (3) is not particularly limited by the method of synthesis. It is prepared through commonly employed organic synthesis processes. For example, the compound of formula (3) may be obtained by direct esterification reaction between an acid and an alcohol, reaction between an acid halide and an alcohol, or interesterification reaction. The resulting product may be purified by an appropriately selected method, such as distillation, recrystallization, reprecipitation, filtration, or adsorption.

The hindered amine compound (B) represented by formula (1) is infiltrated into the silica (A) by the following impregnation methods 1. to 6., which are for illustrative purposes only but not for limitation.
1. A method including providing a liquid hindered amine compound, which has been liquefied by heating if needed, mixing the liquid hindered amine compound with silica under atmospheric pressure or in vacuo.
2. A method including mixing a solid hindered amine compound with silica to cause the solid hindered amine compound to be sorbed onto/into the silica.
3. A method including dissolving a hindered amine compound in a solvent, mixing the solution with silica to impregnate the silica with the solution, and removing the solvent by evaporation.
4. A method including attaching a hindered amine compound to the surface of silica and applying a pressure to cause the hindered amine compound to migrate into and be adsorbed onto the inside of the voids of the silica.
5. A method including vaporizing a hindered amine compound and causing the vapor to be adsorbed onto the silica.
6. A method including synthesizing a hindered amine compound in the presence of silica to obtain the hindered amine compound as infiltrated into the silica.

The hindered amine compound of formula (1) as component (B) may be in the form of a mixture with the benzoate light stabilizer of formula (3) as component (C). As used therein, the terminology "infiltrate" or "impregnate" means to infiltrate a liquid into the voids of a solid (to impregnate a solid with a liquid) or to cause fine solid particles to be sorbed (absorbed and/or adsorbed) onto/into the voids of a solid.

The impregnation of the silica (A) with the hindered amine compound (B) of formula (1) is preferably as uniform as possible. The silica is preferably cleaned or surfaced-treated beforehand to facilitate infiltration of the hindered amine compound. The impregnation may be carried out in vacuo so as to evacuate air from the voids of the silica.

The apparatus for preparing the light stabilizer composition of the invention is not particularly limited. Various types of mixers, stirring mixers, rolling mixers, and the like may be used. The apparatus may be equipped with a heater, a cooler, a pressure reducing unit, a stirrer, a starting material recovery mechanism, an inert gas supply, and so on.

The impregnation may be performed batchwise, semibatchwise, or continuously.

In preparing the light stabilizer composition of the invention, the mixing ratio of the hindered amine (B) of formula (1) to the silica (B) is preferably 30/70 or higher, more preferably 50/50 or higher, by weight, while varying depending on the oil absorption of the silica. When the mixing ratio is smaller than 30/70, the proportion of inorganic matter in a resin composition containing the light stabilizer composition may be too large to ignore the adverse influences of the inorganic matter on the resin physical properties.

Any kind of resins can be stabilized with the light stabilizing composition of the invention, including thermoplastic resins, thermosetting resins, crystalline resins, amorphous resins, biodegradable resins, non-biodegradable resins, synthetic resins, naturally-occurring resins, general-purpose resins, engineering resins, polymer alloys, and so on. Examples of the thermoplastic resins to be stabilized include α-olefin polymers and copolymers, such as polypropylene, low-density polyethylene, linear low-density polyethylene, high-density polyethylene, polybutene-1, poly-3-methylpentene, poly-4-methylpentene, and ethylene-propylene copolymers; copolymers of the α-olefin listed above and a polyunsaturated compound (e.g., a conjugated or non-conjugated diene), acrylic acid, methacrylic acid, a vinyl acetate, and so on; linear polyesters or acid-modified polyesters, such as polyethylene terephthalate, polyethylene terephthalate isophthalate, polyethylene terephthalate p-hydroxybenzoate, and polybutylene terephthalate; biodegradable resins, such as aliphatic polyesters; liquid crystal polyesters; polyamides, such as polycaprolactam and polyhexamethylene adipamide; liquid crystal polyamides; polyimides; polystyrene; copolymers of styrene and/or α-methylstyrene and other monomers (e.g., maleic anhydride, phenylmaleimide, methyl methacrylate, butadiene, and acrylonitrile), such as acrylonitrile-styrene copolymer (AS) resins, acrylonitrile-butadiene-styrene copolymer (ABS) resins, methyl methacrylate-butadiene-styrene copolymer (MBS) resins, and heat resistant ABS resins); halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic ester copolymers, vinyl chloride-maleic ester copolymers, and vinyl chloride-cyclohexylmaleimide copolymers; polymers of (meth)acrylic esters, such as methyl (meth)acrylate, ethyl (meth)acrylate, and octyl (meth)acrylate; polyether ketones, polyvinyl acetate, polyvinyl formal, polyvinyl butyral, polyvinyl alcohol, linear or branched polycarbonates, petroleum resins, chromane resins, polyphenylene oxide, polyphenylene sulfide, thermoplastic polyurethane, and cellulosic resins; thermosetting resins, such as epoxy resins, phenol resins, urea resins, melamine resins, unsaturated polyester resins, and thermosetting polyurethane; naturally-occurring resins, such as natural rubber, biological aliphatic polyesters (e.g., poly(3-hydroxybutyrate)), biological aliphatic polyamides, starch, cellulose, chitin, chitosan, gluten, and gelatin; general-purpose resins, engineering resins, and polymer alloys. The term "polymer alloy" as used herein means a multi-component polymer, which may be a block copolymer or a polymer blend obtained by mixing or otherwise.

Further included in the resins are elastomers, α-olefin elastomers, such as isoprene rubber, butadiene rubber, butadiene-styrene copolymer rubber, butadiene-acrylonitrile copolymer rubber, acrylonitrile-butadiene-styrene copolymer rubber; ethylene-α-olefin (e.g., propylene or butene-1) copolymer rubbers and ethylene-α-olefin-non-conjugated diene (e.g., ethylidene norbornene or cyclopentadiene) terpolymer rubbers; and silicone resins. The resins described, inclusive of elastomers and rubbers, may be used in the form of their alloys or blends.

The stabilizing effect of the light stabilizer composition on these resins may vary depending on various factors, such as stereoregularity, specific gravity, the kind of a polymerization catalyst, the catalyst polymerization, whether or not the polymerization catalyst has been removed, crystallinity, polymerization conditions such as temperature and pressure, type of crystals, the size of crystal lamellae determined by X-ray small angle scattering, the aspect ratio of crystals, solubility in aromatic or aliphatic solvents, solution viscosity, melt viscosity, average molecular weight, molecular weight distribution, and the number of peaks of the molecular weight distribution curve of the resins, and, in the case of copolymers, whether the structure is block or random and the copolymerization ratio of monomers. Be that as it may, the light stabilizer composition of the invention is effectively applicable to any resin selected.

Among the above resins preferred are polyolefin resins in that the effect of the invention is pronounced on polyolefin resins. Examples of polyolefin resins include homo- and copolymers of α-olefins, such as polypropylene, low-density polyethylene, linear low-density polyethylene, high-density polyethylene, polybutene-1, poly-3-methylpentene, poly-4-methylpentene, and ethyl-propylene copolymers.

The manner of incorporating the light stabilizer composition of the invention into the resin is not particularly restricted, and any known compounding technique may be used. For instance, the light stabilizer composition may be added to the polymerization system for the preparation of the resin before, during, or after the polymerization reaction. In the case when the light stabilizer composition is added after the polymerization reaction, it may be mixed with powder or pellets of the resin to be stabilized in, e.g., a Henschel mixer and kneaded in a processing device such as an extruder, or the light stabilizer composition is masterbatched and added to the resin. The processing device to be used, processing temperature, cooling conditions after processing, and the like are not particularly limited. These conditions are chosen appropriately so as to provide a resin composition with physical properties suited for an intended use. The light stabilizer composition of the invention may be once formed, either alone or in combination with other additives, into granules to be added to the resin.

The light stabilizer composition of the invention is incorporated into a resin in an amount of 0.01 to 1 part by mass, preferably 0.02 to 0.5 parts by mass, per 100 parts by mass of the resin. When used in a smaller amount, a required stabilizing effect may not be obtained. When added in a larger amount, the light stabilizer can bleed out from a resin molded product.

If desired, various compounding additives may be added when the light stabilizer composition of the invention is added to a resin. Examples of such compounding additives include phenol antioxidants, phosphorus antioxidants, thioether antioxidants, UV absorbers, hindered amine compounds other than those of general formula (1), nucleating agents, flame retardants, flame retardant aids, lubricants, fillers, metal soaps, hydrotalcite compounds, antistatics, pigments, and dyes.

Examples of the phenol antioxidants include 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis(6-t-butyl-4-methylphenol), 2,2'-thiodiethylene-bis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), isooctyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamidebis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylene-bis(4,6-di-t-butylphenol), 3,5-bis(1,1-dimethylethyl)-4-hydroxybenzene propanoic acid C13-15 alkyl esters, 2,5-di-t-amylhydroquinone, hindered phenol polymer (AO.OH998, manufactured by ADEKA Palmarole SAS), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5-methyl)propoxy]-2,4,8,10-tetra-t-butylbenz[d,f][1,3,2]-diox aphosphepin, hexamethylenebis[3-(3,5-di-t-butyl-4-hydroxyphenyl)propionate, calcium bis[monoethyl(3,5-di-t-butyl-4-hydroxybenzyl)phosphonate], a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazin-2-ylamino)phenol, DL-α-tocopherol (vitamin E), 2,6-bis(α-methylbenzyl)-4-methylphenol, bis[3,3-bis(4'-hydroxy-3'-t-butylphenyl)butanoic acid] glycol ester, 2,6-di-t-butyl-p-cresol, 2,6-diphenyl-4-octadecyloxyphenol, stearyl (3,5-di-t-butyl-4-hydroxyphenyl)propionate, distearyl(3,5-di-t-butyl-4-hydroxybenzyl) phosphonate, tridecyl-3,5-di-t-butyl-4-hydroxybenzylthioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid] glycol ester, 4,4'-butylidenebis(2,6-di-t-butylphenol), 4,4'-butylidene-bis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl] terephthalate, 1,3,5-tris(2,6-dimethyl-3-hydroxy-4-t-butylbenzyl) isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl] isocyanurate, tetrakis[methylene-3-(3',5'-di-t-butyl-4'-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydrocinnamoyloxy)-1,1-dimethylethyl]-2,4,8, 10-tetraoxaspiro[5.5]undecane, triethylene glycol bis[(**β**-(3-t-butyl-4-hydroxy-5-methylphenyl)propionate], and 3-(3,5-dialkyl-4-hydroxyphenyl)propionic acid derivatives, such as stearyl-3-(3,5-di-tert-butyl-4-hydroxyphenyl)propionamide, palmityl-3-(3,5-di-tert-butyl-4-hydroxyphenyl)propionamide, myristyl-3-(3,5-di-tert-butyl-4-hydroxyphenyl)propionamide, and lauryl-3-(3,5-di-tert-butyl-4-hydroxyphenyl)propionamide.

Examples of the phosphorus antioxidants include triphenyl phosphite, diisooctyl phosphite, heptakis triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropylene glycol)phosphite, diisodecyl pentaerythritol diphosphite, dioleyl hydrogen phosphite, trilauryl trithiophosphite, bis(tridecyl) phosphite, tris(isodecyl) phosphite, tris(tridecyl) phosphite, diphenyldecyl phosphite, dinonylphenyl-bis(nonylphenyl) phosphite, poly(dipropylene glycol) phenyl phosphite, tetraphenyldipropylene glycol diphosphite, trisnonylphenyl phosphite, tris(2,4-di-t-butylphenyl) phosphite, tris(2,4-di-t-butyl-5-methylphenyl) phosphite, tris[2-t-butyl-4-(3-t-butyl-4-hydroxy-5-methylphenylthio)-5-methylphenyl] phosphite, tridecyl phosphite, octyldiphenyl phosphite, di(decyl) monophenyl phosphite, distearyl pentaerythritol diphosphite, a mixture of distearyl pentaerythritol and calcium stearate, alkyl(C10) bisphenol-A phosphite, di(tridecyl)pentaerythritol diphosphite, di(nonylphenyl) pentaerythritol diphosphite, bis(2,4-di-t-butylphenyl) pentaerythritol diphosphite, bis(2,6-di-t-butyl-4-methylphenyl) pentaerythritol diphosphite, bis(2,4,6-tri-t-butylphenyl) pentaerythritol diphosphite, bis(2,4-dicumylphenyl) pentaerythritol diphosphite, tetraphenyl-tetra(tridecyl)pentaerythritol tetraphosphite, bis(2,4-di-t-butyl-6-methylphenyl)ethyl phosphite, tetra(tridecyl)isopropylidenediphenol diphosphite, tetra(tridecyl)-4,4'-n-butylidenebis(2-t-butyl-5-methylphenol) diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, 9,10-dihydro-9-oxa-10-phosphaphenanthrene-10-oxide, (1 -methyl-1-propanyl-3-ylidene)-tris(1,1-dimethylethyl)-5-methyl-4,1-phenylene)hexatr idecyl phosphite, 2,2'-methylenebis(4,6-t-butylphenyl)-2-ethylhexyl phosphite, 2,2'-methylenebis(4,6-di-t-butylphenyl)octadecyl phosphite, 2,2'-ethylidenebis(4,6-di-t-butylphenyl) fluorophosphite, 4,4'-butylidenebis(3-methyl-6-t-butylphenylditridecyl) phosphite, tris(2-[(2,4,8,10-tetrakis-t-butyldibenzo[d,f][1,3,2]dioxaphosphepin-6-yl)oxy]ethyl)ami ne, 3,9-bis(4-nonylphenoxy)-2,4,8,10-tetraoxa-3,9-diphosphaspiro[5,5]undecane, 2,4,6-tri-t-butylphenyl-2-butyl-2-ethyl-1,3-propanediol phosphite, and poly-4,4'-isopropylidenediphenol C12-15 alcohol phosphites.

Examples of the above-described thioether antioxidants include tetrakis[methylene-3-(laurylthio)propionate]methane, bis(methyl-4-[3-n-alkyl(C12/C14)thiopropionyloxy]-5-t-butylphenyl) sulfide, ditridecyl-3,3 '-thiodipropionate, dilauryl-3,3 '-thiodipropionate, dimyristyl 3,3'-thiodipropionate, distearyl-3,3'-thiodipropionate, lauryl/stearyl thiodipropionate, 4,4'-thiobis(6-t-butyl-m-cresol), 2,2'-thiobis(6-t-butyl-p-cresol), and distearyl disulfide.

Examples of the UV absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-t-octyl-6-benzotriazolylphenol), a polyethylene glycol ester of 2-(2-hydroxy-3-t-butyl-5-carboxyphenyl)benzotriazole, 2-[2-hydroxy-3-(2-acryloyloxyetllyl)-5-methylphenyl]benzotriazole, 2-[2-hydroxy-3-(2-methacryloyloxyethyl)-5-t-butylphenyl]benzotriazole, 2-[2-hydroxy-3-(2-methacryloyloxyethyl)-5-t-octylphenyl]benzotriazole, 2-[2-hydroxy-3-(2-methacryloyloxyethyl)-5-t-butylphenyl]-5-chlorobenzotriazole, 2-[2-hydroxy-5-(2-methacryloyloxyethyl)phenyl]benzotriazole, 2-[2-hydroxy-3-t-butyl-5-(2-methacryloyloxyethyl)phenyl]benzotriazole, 2-[2-hydroxy-3-t-amyl-5-(2-methacryloyloxyethyl)phenyl]benzotriazole, 2-[2-hydroxy-3-t-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3 -methacryloyloxypropyl)phenyl]benzotriazole; 2-(2-hydroxyphenyl)-4,6-diaryl-1,3,5-triazines, such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to 13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine, and 2,4,6-tris(2-hydroxy-3-methyl-4-hexyloxyphenyl)-1,3,5-triazine; benzoates, such as phenyl salicylate, resorcinol monobenzoate, 2,4-di-t-butylphenyl-3,5-di-t-butyl-4-hydroxybenzoate, octyl (3,5-di-t-butyl-4-hydroxy)benzoate, dodecyl(3,5-di-t-butyl-4-hydroxy)benzoate, tetradecyl(3,5-di-t-butyl-4-hydroxy)benzoate, hexadecyl(3,5-di-t-butyl-4-hydroxy)benzoate, octadecyl(3,5-di-t-butyl-4-hydroxy)benzoate, and behenyl(3,5-di-t-butyl-4-hydroxy)benzoate; substituted oxanilides, such as 2-ethyl-2'-ethoxyoxanilide and 2-ethoxy-4'-dodecyloxanilide; cyanoacrylates, such as ethyl-α-cyano-β,β-diphenylacrylate and methyl-2-cyano-3-methyl-3-(p-methoxyphenyl)acrylate; and various metal salts and chelates, particularly salts and chelates of nickel and chromium.

Examples of useful hindered amine compounds other than the compounds of general formula (1) include 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl butanetetracarboxylate, tetrakis(1,2,2,6,6-pentamethyl-4-piperidyl butanetetracarboxylate, bis(2,2,6,6-tetramethyl-4-piperidyl)-di(tridecyl)-1,2,3,4-butanetetracarboxylate, bis(1 ,2,2,6,6-pentamethyl-4-piperidyl)-di(tridecyl)-1,2,3,4-butanetetracarboxylate, bis(1,2,2,6,6-pentamethyl-4-piperidyl)-2-butyl-2-(3,5-di-t-butyl-4-hydroxybenzyl) malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/dibromoethane polycondensate,
1,6-bis(2,2,6,6-tetramethyl-4-piperidylamino)hexane/2,4-dichloro-6-morpholino-s-triazi ne polycondensates, 1,6-bis(2,2,6,6-tetramethyl-4-piperidylamino)hexane/2,4-dichloro-6-t-octylamino-s-tria zine polycondensates, 1,5,8,12-tetrakis[2,4-bis(N-butyl-N-(2,2,6,6-tetramethyl-4-piperidyl)amino)-s-triazin-6-yl]-1,5,8,12-tetraazadodecane,
1,5,8,12-tetrakis[2,4-bis(N-butyl-N-(1,2,2,6,6-pentamethyl-4-piperidyl)amino)-s-triazin -6-yl]-1,5,8,12-tetraazadodecane,
1,6,11-tris[2,4-bis(N-butyl-N-(2,2,6,6-tetramethyl-4-piperidyl)amino)-s-triazin-6-yl-ami noundecane,
1,6,11-tris[2,4-bis(N-butyl-N-(1,2,2,6,6-pentamethyl-4-piperidyl)amino)-s-triazin-6-yl-a minoundecane.

Examples of the nucleating agents include metal carboxylates, such as sodium benzoate, aluminum 4-tert-butylbenzoate, sodium adipate, and disodium bicyclo[2.2.1]heptane-2,3-dicaboxylate; phosphoric ester metal salts, such as sodium bis(4-tert-butylphenyl) phosphate, sodium 2,2'-methylenebis(4,6-di-tert-butylphenyl) phosphate, and lithium 2,2'-methylenebis(4,6-di-tert-butylphenyl) phosphate; polyhydric alcohol derivatives, such as dibenzylidene sorbitol, bis(methylbenzylidene) sorbitol, bis(3,4-dimethylbenzylidene) sorbitol, bis(p-ethylbenzylidene)sorbitol, and bis(dimethylbenzylidene) sorbitol; and amide compounds, such as N,N',N"-tris[2-methylcyclohexyl]-1,2,3-propanetricarboxamide, N,N',N"-tricyclohexyl-1,3,5-benzenetricarboxamide, N,N'-dicyclohexylnaphthalenedicarboxamide, and 1,3,5-tri(dimethylisopropylamino)benzene.

Examples of the phosphorus flame retardants include aromatic phosphoric esters, such as triphenyl phosphate, tricresyl phosphate, trixylenyl phosphate, cresyldiphenyl phosphate, cresyl-2,6-dixylenyl phosphate, resorcinol bis(diphenylphosphate), (1-methylethylidene)-4,1-phenylenetetraphenyl diphosphate, 1,3-phenylenetetrakis(2,6-dimethylphenyl) phosphate, ADEKA STAB FP-500 (available from ADEKA Corp.), ADEKA STAB FP-600 (available from ADEKA Corp.), ADEKA STAB FP-800 (available from ADEKA Corp.); phosphonic esters, such as divinyl phenylphosphonate, diallyl phenylphosphonate, and (1-butenyl)phenylphosphonate; phosphinic esters, such as phenyl diphenylphosphinate, methyl diphenylphosphinate, and 9,10-dihydro-9-oxa-10-phosphaphenanthlene-10-oxide derivatives; phosphazene compounds, such as bis(2-allylphenoxy)phosphazene and dicresylphosphazene; melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus. Examples of the metal hydroxides include magnesium hydroxide and aluminum hydroxide. Examples of the bromine flame retardants include brominated bisphenol A epoxy resins, brominated phenol novolak epoxy resins, hexabromobenzene, pentabromotoluene, ethylenebis(pentabromophenyl), ethylenebis(tetrabromophthalimide), 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenylmaleimide, tribromophenyl acrylate, tribromophenyl methacrylate, tetrabromobisphenol A dimethacrylate, pentabromobenzyl acrylate, and brominated styrene. The flame retardant is preferably used in combination with an anti-drip agent, such as a fluororesin, or a flame retardant aid, such as a polyhydric alcohol or hydrotalcite.

The lubricant is used with a view to impart lubricity to the surface of molded products so as to protect from scratches. Examples of useful lubricants include unsaturated fatty acid amides, such as oleamide and erucamide, and saturated fatty acid amides, such as behenamide and stearamide. These lubricants may be used either alone or in combination of two or more thereof.

Examples of the fillers include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whisker, wollastonite, and fibrous magnesium oxysulfate. The filler to be used is selected appropriately according to the particle size (or diameter, length, and aspect ratio of fibrous fillers). If desired, the filler may be surface-treated.

The hydrotalcite compounds are complex salt compounds composed of magnesium, aluminum, hydroxyl groups, a carbonic group, and optionally crystallization water, which naturally occur or are synthesized. The hydrotalcite compounds may have part of magnesium or aluminum displaced with other metals, such as alkali metals and zinc, or may have the hydroxyl group or carbonic group displaced with other anionic group. Examples of such hydrotalcite compounds include those represented by general formula (4) below having part of the metal displaced with an alkali metal and Al-Li-based hydrotalcite compounds represented by general formula (5) below.
[Chem.7]

*Mg*_{*x*1}*Zn*_{*x*2}*Al*₂(*OH*)_{2(*x*1+*x*2)+4}(*CO₃*)*·pH*₂*O* (4)

wherein x1 and x2 are numbers satisfying the relationships: 0 ≤ x2/x1 <10 and 2 ≤ x1 + x2 ≤ 20; and p is 0 or a positive number.
[Chem.8]

[*Li*_{1/3}*Al*_{2/3}(*OH*)₂]•[*A^{q-}*_{1/3*q*}•*pH*₂*O*] (5)

wherein A^{q-} is a q-valent anion; and p is 0 or a positive number.

Part of the carbonate anion in the hydrotalcite compound may be displaced with other anions.

Water of crystallization of the hydrotalcite compound may be removed. The hydrotalcite compound may be coated with a higher fatty acid (e.g., stearic acid), a higher fatty acid metal salt (e.g., alkali metal oleate), an organic sulfonic acid metal salt (e.g., alkali metal dodecylbenzenesulfonate), a higher fatty acid amide, a higher fatty acid ester, or a wax.

The hydrotalcite compound may be either naturally-occurring or synthetic. Useful processes for the synthesis are described, e.g., in JP 46-2280B, JP 50-30039B, JP 51-29129B, JP 3-36839B, JP 61-174270A, and JP 5-179052A. The hydrotalcite compounds may be used irrespective of their crystal structure, crystal grain size, and the like.

Examples of the antistatics include cationic antistatics, such as fatty acid quaternary ammonium ion salts and quaternary polyamine salts; anionic antistatics, such as higher alcohol phosphoric ester salts, higher alcohol EO adducts, polyethylene glycol fatty acid esters, anionic alkylsulfonates, higher alcohol sulfuric ester salts, higher alcohol ethylene oxide-added sulfuric ester salts, and higher alcohol ethylene oxide-added phosphoric ester salts; nonionic antistatics, such as polyhydric alcohol fatty acid esters, polyglycol phosphoric esters, and polyoxyethylene alkyl allyl ethers; and amphoteric antistatics, such as amphoteric alkyl betaines, e.g., alkyl dimethylaminoacetic acid betaine, and amphoteric imidazoline surfactants. These antistatics may be used either individually or in combination of two or more thereof.

The amount of each additive to be added to the resin composition of the invention is decided within a range of from the minimum necessary to produce the intended effect to an amount above which no substantial increase of the intended effect is obtained. In a preferred embodiment, a polyolefin resin composition, for example, may contain 0.001 to 10 parts by mass of a phenol antioxidant, 0.001 to 10 parts by mass of a phosphorus antioxidant, 0.001 to 10 parts by mass of a thioether antioxidant, 0.001 to 10 parts by mass of an UV absorber, 0.001 to 10 parts by mass of a hindered amine compound, 1 to 50 parts by mass of a flame retardant, 0.03 to 2 parts by mass of a lubricant, 0.03 to 2 parts by mass of a hydrotalcite compound, and 0.03 to 2 parts by mass of a hydrotalcite compound, and 0.03 to 2 parts by mass per 100 parts by mass of a polyolefin resin.

The resin composition of the invention is suitably used to make vehicle parts, such as interior and exterior trim, body panels, plastic window glazing, and so on of automobiles, industrial vehicles, personal vehicles, self-propelled vehicles, trains, and the like. The resin composition of the invention may be used as a resin base or a protective film for these parts.

Examples of the vehicle exterior parts include door moldings, door mirror frames, hubcaps, spoilers, bumpers, winker lenses, pillar garnishes, rear finishers, and headlight covers.

Examples of the vehicle interior parts include instrument panels, console boxes, meter covers, door lock bezels, steering wheels, power window switch bases, center clusters, dash boards, and hoods.

Examples of the vehicle body panels include front wings, front and rear doors, roofs, hoods, trunk lids, and hatchback doors.

Examples of the plastic window glazing include sun roofs, windshields, front and rear door windows, rear quarter windows, and rear door quarter windows.

The invention will now be illustrated with reference to Examples and Comparative Examples.

### Examples 1-1 to 1-7 and Comparative Examples 1-1 to 1-5

The hindered amine compound shown in Tables 1 and 2 was stirred in an FM mixer (FM-20, from Nippon Coke Engineering Co., Ltd.) at 40°C for 20 minutes. After making sure that the hindered amine compound melted, silica was added thereto in a hindered amine compound to silica weight ratio of 30/70, 40/60, and 50/50 under atmospheric pressure to prepare light stabilizer compositions having varied mixing ratios.

The resulting light stabilizer compositions were evaluated for the following properties.

### (1) State

Each light stabilizer composition was put in a beaker and stirred by drawing circles with a glass rod on the bottom of the beaker. The state of the composition was then observed with the naked eye and rated according to the following scheme:
AA = free-flowing powder
A = moist powder
B = lumps with low stickiness
C = sticky paste

A powdery composition has good handling properties and is relatively easy to disperse uniformly in a resin. A lumpy or pasty composition can have poor dispersibility in a resin and therefore not only fail to impart sufficient weatherability to the resin but also adversely affect the appearance of molded products.

### (2) Antistatic properties

When silica and the hindered amine compound were put in the FM mixer, static electrification of silica was observed with the naked eye and rated as follows.
A = Silica was put in the FM mixer with no problem.
B = Silica was difficult to put in the FM mixer because it adhered to the inner wall of the mixer due to electrification.
C = Silica scattered around the FM mixer due to electrification.

### (3) Ease of mixing

Ease of mixing silica and the hindered amine compound was evaluated by observing the resulting light stabilizer composition with the naked eye. Ease of mixing was rated as follows.
A = Silica was found to have inseparably absorbed the hindered amine compound.
B = Silica and the hindered amine compound were separate from each other.

**Table 1**

| | | Example | | | | | | |
|---|---|---|---|---|---|---|---|---|
| | | 1-1 | 1-2 | 1-3 | 1-4 | 1-5 | 1-6 | 1-7 |
| (A)Hindered Amine Compound | | compound No. 1 | compound No. 1 | compound No. 1 | compound No. 8 | compound No. 8 | compound No. 5 | compound No. 1 |
| (B)Silica | Compound | silica A | silica B | silica C | silica A | silica B | silica A | silica D-2 |
| | Water Content | 6.60% | 6.00% | 3.50% | 6.60% | 6.00% | 6.60% | 5.00% |
| (A)/(B) = 30/70 (by wt) | State | AA | AA | AA | AA | AA | AA | AA |
| | Antistatic Properties | A | A | A | A | A | A | A |
| | Ease of Mixing | A | A | A | A | A | A | A |
| (A)/(B) = 40/60 (by wt) | State | AA | AA | AA | AA | AA | AA | AA |
| | Antistatic Properties | A | A | A | A | A | A | A |
| | Ease of Mixing | A | A | A | A | A | A | A |
| (A)/(B) = 50/50 (by wt) | State | AA | AA | AA | AA | AA | AA | AA |
| | Antistatic Properties | A | A | A | A | A | A | A |
| | Ease of Mixing | A | A | A | A | A | A | A |

| | | | | | | | | |
|---|---|---|---|---|---|---|---|---|
| silica A: CARPLEX #80 (wet processed silica; water content: 6.6%; volume average particle size: 15.0 µm; available from DSL Japan Co., Ltd.) Silica B: SIPERNAT 22 (wet processed silica; water content: 6.0%; volume average particle size: 11.5 µm; available from Evonik Industries AG) Silica C: Mizukasil P-78D (wet processed silica; water content: 3.5%; volume average particle size: 12 µm; available from Mizusawa Industrial Chemicals, Ltd.) Silica D: CARPLEX CS-7 (wet processed silica; water content: 1.0%; volume average particle size: 3.0 µm; available from DSL Japan) Silica D-2: Silica D having a water content adjusted to 5.0% by the addition of water. | | | | | | | | |

**Table 2**

| | | Comparative Example | | | |
|---|---|---|---|---|---|
| | | 1-1 | 1-2 | 1-3 | 1-4 |
| (A)Hindered Amine Compound | | compound No. 1 | compound No. 1 | compound No. 8 | compound No. 8 |
| (B)Silica | Compound | silica D | silica E | silica D | silica E |
| | Water Content | 1.00% | 0.60% | 1.00% | 0.60% |
| (A)/(B) = 30/70 (by wt) | State | AA | B | AA | B |
| | Antistatic Properties | B | C | B | C |
| | Ease of Mixing | A | C | A | C |
| (A)/(B) = 40/60 (by wt) | State | AA | B | AA | B |
| | Antistatic Properties | B | C | B | C |
| | Ease of Mixing | A | C | A | C |
| (A)/(B) = 50/50 (by wt) | State | AA | B | AA | B |
| | Antistatic Properties | B | C | B | C |
| | Ease of Mixing | A | C | A | C |

| | | | | | |
|---|---|---|---|---|---|
| Silica E: AEROSIL R974 (dry processed silica; water content: 0.6%; volume average particle size: 0.016 µm; available from Evonik Industries) | | | | | |

It is seen from the results of Comparative Examples 1-1 to 1-4 that, when the water content of silica was out of the range of from 2 to 7 wt%, the light stabilizer compositions have the problem of handling. In contrast, the light stabilizer compositions of the invention prepared by using silica having a water content adjusted to 2 to 7 wt% exhibit excellent handling properties.

### Example 2-1 (stabilization of polypropylene)

Seventy parts by mass of a polypropylene resin (MFR: 30 g/10 min; density: 0.9 g/cm³), 10 parts by mass of an elastomer ENGAGE 8100 (from Dow Chemical), 20 parts by mass of talc P-4 (from Nippon Talc Co., Ltd.) as a filler, 0.05 parts by mass of tetrakis(3-(3,5-di-t-butyl-4-hydroxyphenyl)propionyloxymethyl)methane as a phenol antioxidant, 0.05 parts by mass of tris(2,4-di-t-butylphenyl) phosphite as a phosphorus antioxidant, 0.05 parts by mass of calcium stearate, 3 parts by mass of a beige masterbatch PPCM700V-118 (from Tokyo Printing Ink Mfg Co., Ltd.) as a pigment, and 0.1 parts by mass of the light stabilizer composition of Example 1-1 as shown in Table 3 were mixed well and melt-kneaded at a resin temperature of 230°C and pelletized using a twin-screw extruder while allowing gas to escape. The extruded pellets were injection molded at 230°C to make a test specimen measuring 60 mm × 20 mm × 2 mm.

### Comparative Example 2-1

A test specimen was made in the same manner as in Example 2-1, except that the light stabilizer composition (0.1 parts by mass) of Example 1-1 was not used.

### Comparative Example 2-2

A test specimen was made in the same manner as in Example 2-1, except for replacing the light stabilizer composition of Example 1-1 with 0.1 parts by mass of a light stabilizer composition having the same composition as that of Example 1-1 but prepared without impregnating the silica with the hindered amine compound.

### Weatherability test:

The specimen prepared above was exposed to light in a weathering instrument at 83°C with rain (sprinkled with ion-exchanged water for 6 hours per day). The specimen was taken out of the weathering instrument for every 120 hours and evaluated for weatherability in terms of gloss retention. After measuring the gloss, the specimen was immediately returned to the weathering instrument to resume the weatherability test.

### Gloss retention:

The gloss of the specimen was measured at an angle of 60° using a glossmeter VG-2000 from Nippon Denshoku Industries Co., Ltd. to calculate a gloss retention (a percentage of the gloss after weathering test to the initial gloss). The results obtained are shown in Table 3.

**Table 3**

| | | Example 2-1 | Compara. Example 2-1 | Compara. Example 2-2 |
|---|---|---|---|---|
| Light Stabilizer Composition | Kind | Example 1-1 | - | the same composition as in Example 1-1 |
| | Amount (part by mass) | 0.1 | - | 0.1 |
| Impregnation of Silica | | yes | control | no |
| Gloss Retention | 120 hrs | 86.0 | 84.0 | 92.2 |
| | 240 hrs | 87.2 | 86.0 | 91.7 |
| | 360 hrs | 86.4 | 88.0 | 92.5 |
| | 480 hrs | 87.9 | 87.0 | 98.0 |
| | 600 hrs | 94.9 | 93.4 | 106.5 |
| | 720 hrs | 96.4 | 94.9 | 110.8 |
| | 840 hrs | 91.8 | 94.9 | 106.0 |
| | 960 hrs | 94.7 | 70.2 | 105.0 |
| | 1080 hrs | 93.9 | 50.8 | 107.8 |
| | 1200 hrs | 96.1 | 10.1 | 111.8 |
| | 1320 hrs | 93.9 | - | 104.5 |
| | 1440 hrs | 98.1 | - | 61.9 |
| | 1560 hrs | 96.6 | - | 41.9 |
| | 1680 hrs | 88.4 | - | 22.3 |

In Comparative Example 2-1, because the deterioration of the surface of the specimen after 1320 hour exposure was so severe that the evaluation thereafter was cancelled.

The comparison between Example 2-1 and Comparative Example 2-2 gave confirmation that the light stabilizer composition of the invention in which silica is impregnated with the hindered amine compound exhibits excellent stabilizing effect. The high gloss retention indicates that surface blooming of a molded product due to bleeding of the hindered amine compound is prevented. Therefore, the resin composition according to the invention is suitable for the production of vehicle parts the appearance of which is of importance, especially vehicle interior trim.

## Claims

1. A light stabilizer composition comprising (A) 100 parts by mass of silica having a water content of 2 to 7 wt% impregnated with (B) 10 to 300 parts by mass of a hindered amine compound represented by general formula (1): 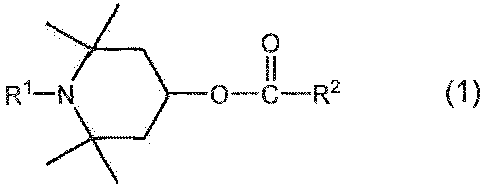 wherein R¹ represents a hydrogen atom, a hydroxyl group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxy radical; and R² represents an alkyl group having 1 to 30 carbon atoms, an alkenyl group having 2 to 30 carbon atoms, or a group represented by general formula (2): 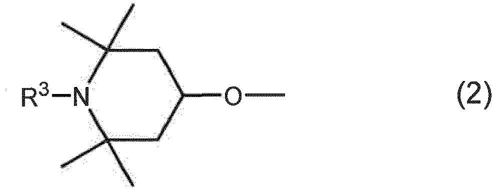 wherein R³ has the same meaning as R¹.

2. The light stabilizer composition according to claim 1, wherein the silica as component (A) has a volume average particle size of 0.1 to 100 µm.

3. The light stabilizer composition according to claim 1 or 2, further comprising (C) 5 to 500 parts by mass of a benzoate light stabilizer represented by general formula 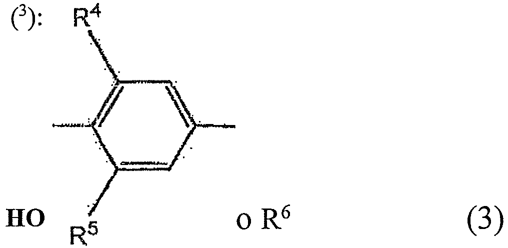 wherein R⁴ and R⁵ each independently represent a hydrogen atom, an alkyl group having 1 to 12 carbon atoms, or an arylalkyl group having 7 to 30 carbon atoms; and R⁶ represents an alkyl group having 8 to 30 carbon atoms.

4. A resin composition comprising 100 parts by mass of a resin and 0.01 to 1 part by mass of the light stabilizer composition according to any one of claims 1 to 3.

5. The resin composition according to claim 4, wherein the resin is a polyolefin resin.

6. A vehicle part obtained by molding the resin composition according to claim 4 or 5.

## Patentansprüche

1. Lichtschutzmittelzusammensetzung, umfassend (A) 100 Massenteile Siliciumdioxid mit einem Wassergehalt von 2 bis 7 Gew.-%, imprägniert mit (B) 10 bis 300 Massenteilen einer sterisch gehinderten Aminverbindung der allgemeinen Formel (1): 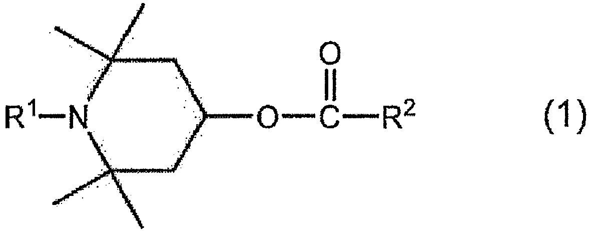 worin R¹ ein Wasserstoffatom, eine Hydroxylgruppe, eine Alkylgruppe mit 1 bis 30 Kohlenstoffatomen, eine Hydroxyalkylgruppe mit 1 bis 30 Kohlenstoffatomen, eine Alkoxygruppe mit 1 bis 30 Kohlenstoffatomen, eine Hydroxyalkoxygruppe mit 1 bis 30 Kohlenstoffatomen oder einen Sauerstoffrest darstellt; und R² eine Alkylgruppe mit 1 bis 30 Kohlenstoffatomen, eine Alkenylgruppe mit 2 bis 30 Kohlenstoffatomen oder eine Gruppe der allgemeinen Formel (2) darstellt: 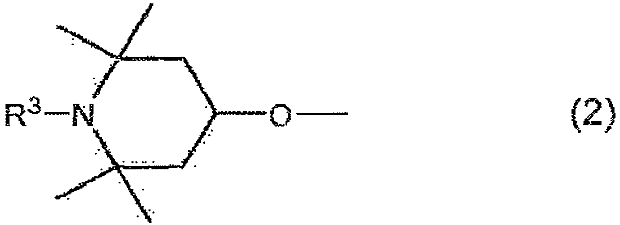 worin R³ die gleiche Bedeutung hat wie R¹.

2. Lichtschutzmittelzusammensetzung nach Anspruch 1, wobei das Siliciumdioxid als Komponente (A) eine volumenmittlere Teilchengröße von 0,1 bis 100 µm aufweist.

3. Lichtschutzmittelzusammensetzung nach Anspruch 1 oder 2, weiterhin umfassend (C) 5 bis 500 Massenteile eines Benzoatlichtschutzmittels der allgemeinen Formel (3): 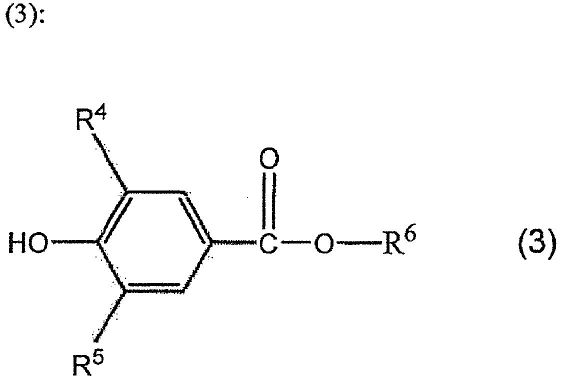 worin R⁴ und R⁵ jeweils unabhängig voneinander ein Wasserstoffatom, eine Alkylgruppe mit 1 bis 12 Kohlenstoffatomen oder eine Arylalkylgruppe mit 7 bis 30 Kohlenstoffatomen darstellen; und R⁶ eine Alkylgruppe mit 8 bis 30 Kohlenstoffatomen darstellt.

4. Harzzusammensetzung, umfassend 100 Massenteile eines Harzes und 0,01 bis 1 Massenteil der Lichtschutzmittelzusammensetzung nach einem der Ansprüche 1 bis 3.

5. Harzzusammensetzung nach Anspruch 4, worin das Harz ein Polyolefinharz ist.

6. Fahrzeugteil, erhalten durch Formen der Harzzusammensetzung nach Anspruch 4 oder 5.

## Revendications

1. Composition de stabilisateur de lumière comprenant (A) 100 parties en masse de silice ayant une teneur en eau de 2 à 7% en poids et imprégnée de (B) 10 à 300 parties en masse un composé d'aminé à encombrement stérique représenté par la formule générale (1): 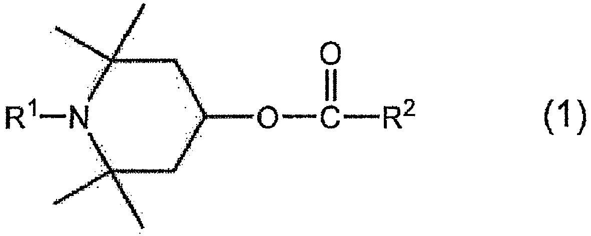 dans laquelle R¹ représente un atome d'hydrogène, un groupe hydroxyle, un groupe alkyle ayant 1 à 30 atomes de carbone, un groupe hydroxyalkyle ayant 1 à 30 atomes de carbone, un groupe alcoxy ayant 1 à 30 atomes de carbone, un groupe hydroxyalcoxy ayant 1 à 30 atomes de carbone ou un radical oxygène; et R² représente un groupe alkyle ayant 1 à 30 atomes de carbone, un groupe alcényle ayant 2 à 30 atomes de carbone ou un groupe de formule générale (2): 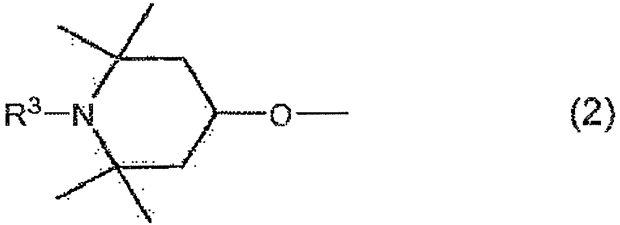 où R³ a la même signification que R¹.

2. Composition de stabilisateur de lumière selon la revendication 1, où la silice a comme composant (A) une granulométrie moyenne en volume de 0,1 à 100 µm.

3. Composition de stabilisateur de lumière selon la revendication 1 ou 2, comprenant en outre (C) de 5 à 500 parties en masse d'un stabilisateur de lumière benzoate de formule générale (3): 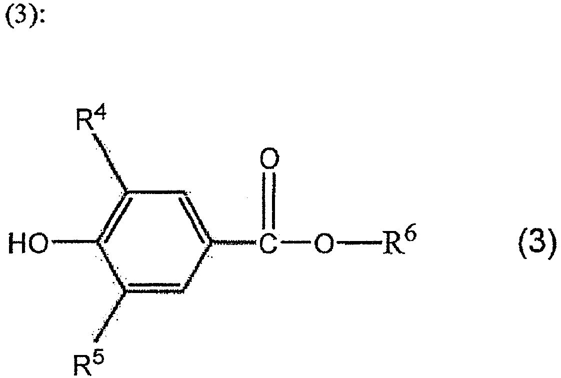 dans laquelle R⁴ et R⁵ représentent chacun indépendamment un atome d'hydrogène, un groupe alkyle ayant 1 à 12 atomes de carbone ou un groupe arylalkyle ayant 7 à 30 atomes de carbone; et R⁶ représente un groupe alkyle ayant 8 à 30 atomes de carbone.

4. Composition de résine comprenant 100 parties en masse d'une résine et 0,01 à 1 partie en masse de la composition de stabilisateur de lumière selon l'une quelconque des revendications 1 à 3.

5. Composition de résine selon la revendication 4, dans laquelle la résine est une résine de polyoléfine.

6. Pièce de véhicule obtenue par moulage de la composition de résine selon la revendication 4 ou 5.
